(19) Europäisches Patentamt
European Patent Office
Office européen des brevets

(11) **EP 3 499 385 A1**

(12) **EUROPEAN PATENT APPLICATION**

(43) Date of publication:
**19.06.2019 Bulletin 2019/25**

(51) Int Cl.:
***G06F 17/30*** *(2006.01)*    ***G06Q 30/02*** *(2012.01)*

(21) Application number: **17002020.0**

(22) Date of filing: **12.12.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(71) Applicant: **AppNexus, Inc.
New York, NY 10010 (US)**

(72) Inventors:
• **Shah, Yash
New York, NY 10010 (US)**

• **Greenstein, Abe
New York, NY 10010 (US)**
• **Le Meur, Tanguy
New York, NY 10010 (US)**
• **Solinger, Kevin
New York, NY 10010 (US)**

(74) Representative: **Müller-Boré & Partner
Patentanwälte PartG mbB
Friedenheimer Brücke 21
80639 München (DE)**

(54) **ESTIMATING VIEWABILITY OF A CONTENT ELEMENT OF A WEB PAGE**

(57)      The application relates to a computer-implemented method, a computer program product and a computer system for estimating viewability of a content element of a web page. Accordingly, viewability is a probability that the content element is positioned within a viewport. Further, the viewport is a visible area of the web page on a display of a client computer. The web page comprises at least one placeholder. The placeholder is a region of the web page in which the content element can be placed. The method comprises retrieving historical viewability values for at least one feature, wherein the at least one feature includes a position of the placeholder on the display. The position of the placeholder is a relative position. The relative position is calculated by dividing the display of the client computer into a specified number of arrays, and determining which of the arrays a specified pixel of the placeholder is in. The method further comprises estimating viewability of the content element based on the historical viewability values for the at least one feature.

FIG. 2

EP 3 499 385 A1

**Description**

BACKGROUND

Unless otherwise indicated herein, the approaches described in this section are not prior art to the claims in this application and are not admitted to be prior art by inclusion in this section.

The technical field of the application is website implementation. More particularly, the application relates to estimating viewability of a content element of a web page.

A publisher of a web page can insert a placeholder in the web page. The placeholder is a region of the web page (or other electronic document) where a content element can be placed. When the web page is displayed in a browser, a visual content element can be dynamically retrieved from a server, and displayed in the placeholder.

A placeholder inventory is a collection of one or more placeholders on web pages served by a publisher's web sites.

Various types of content elements can be placed in placeholders. For example, the content element may be an image or a video. Content elements may relate to user dependent content (e.g., different content elements may be displayed in a given placeholder for different users), or content originating from different sources (e.g., placeholders may be used to serve content from sources other than the site publisher).

SUMMARY

According to an aspect, a computer-implemented method for estimating viewability of a content element of a web page is provided. Viewability may be a probability that the content element is positioned within a viewport. The viewport may be a visible area of the web page on a display of a client computer. The web page comprises at least one placeholder. The placeholder is a region of the web page in which the content element can be placed. The method comprises retrieving historical viewability values for at least one feature, wherein the at least one feature includes a position of the placeholder on the display. The position of the placeholder is a relative position. The relative position is calculated by dividing the display of the client computer into a specified number of arrays, and determining which of the arrays a specified pixel of the placeholder is in. The relative position may be referred to as a relative bucketed position. Each array may be referred to as a bucket. The specified pixel may be a pixel of the placeholder having a specified location (e.g., in the left corner of the placeholder). The arrays may be used to limit the feature set. In particular, the arrays may make it possible to more efficiently estimate viewability of a given content element since the number of values required for the estimate is reduced.

The method further comprises estimating viewability of the content element based on the historical viewability values for the at least one feature.

For each feature, a historical viewability value for the feature may be calculated according to the following:

$$\frac{total\ viewable}{total\ served}$$

"total viewable" is a total number of times one or more content elements described by the feature were served on the web page and displayed within the viewport during a specified period. "total served" is a total number of times the one or more content elements described by the feature were served on the web page during the specified period. Further, *total viewable <= total served.*

In some cases, each of the arrays contains a quantity of pixels of the display, wherein each of the arrays may be a multidimensional array.

Each of the arrays may be the same size. The quantity of pixels may be the same for each of the arrays.

The specified pixel of the placeholder may be a corner of the placeholder. The specified pixel of the placeholder may be the top left corner of the placeholder.

A type of the content element may be image or video.

A location of the specified pixel of the placeholder may depend on the type of the content element.

The at least one feature may be a plurality of features. The at least one feature may further include one or more of the following: an identifier of the content element, a domain of the web page, an identifier of a browser of the client computer, an identifier of an operating system of the client computer, a geographic location of the client computer, a characteristic of the display. The historical viewability values may be retrieved for each of the features.

A subset of the features may be combined into a combined feature. The estimating of the viewability of the content element may be based on each of the features and the combined feature.

The estimating of the viewability of the content element may be carried out according to the following:

$$p = \frac{1}{1 + e^{-(\beta_0 + X_1\beta_1 + \cdots + \beta_n X_n)}}$$

$X_1...X_n$ are each historical viewability values for corresponding features or the combined feature. $\beta_0... \beta_n$ are coefficients.

The coefficients may be determined based on a maximum likelihood estimation using L1 logistic regression.

The viewport may be the entire visible area of the web page on the client computer.

Dividing the display of the client computer into a specified number of arrays may comprise dividing the entire display of the client computer into the specified number of arrays, such that each pixel of the display is contained in one of the arrays. Each pixel of the display may be contained in only one (i.e. no more than one) of the arrays.

The web page may be horizontally and/or vertically scrollable. The web page may include at least one non-visible area outside the viewport that is not visible on the display of the client computer.

The historical viewability values may be based on at least one of the following: a viewport size in pixels, determining whether a DOM element corresponding to the placeholder is within a bounding box corresponding to the viewport, whether a content element is in the placeholder, a percentage of the placeholder that is in the viewport, a duration (i.e., amount of time) that the placeholder is in the viewport.

The historical viewability values may be determined for multiple content elements, multiple placeholders, and/or multiple viewports.

The disclosed subject matter may also be implemented in a computer system including one or more servers and at least one processor. The disclosed subject matter may also be implemented in a device, and in one or more computer program products.

Such computer program products may cause a data processing apparatus to perform one or more operations described in the application.

The subject matter described in the application can be implemented in a data signal or on a machine readable medium, where the medium is embodied in one or more information carriers, such as a CD-ROM, a DVD-ROM, a semiconductor memory, or a hard disk.

In addition, the subject matter described in the application can be implemented as a system including a processor, and a memory coupled to the processor. The memory may encode one or more programs to cause the processor to perform one or more of the methods described in the application. Further subject matter described in the application can be implemented using various machines.

The details of one or more implementations of the subject matter described in this specification are set forth in the accompanying drawings and the description below. Other features, aspects, and advantages of the subject matter will become apparent from the description, the drawings, and the claims.

BRIEF DESCRIPTION OF THE DRAWINGS

FIG. 1 illustrates an example system for estimating viewability of a content element of a web page.

FIG. 2 is an exemplary web browser window displaying a scrollable web page.

FIG. 3 is a data flow diagram of an exemplary method for performing a task based on viewability of a placeholder.

FIG. 4 is a flowchart of another exemplary method for estimating viewability of a content element of a web page.

Like reference numbers and designations in the various drawings indicate like elements.

DETAILED DESCRIPTION

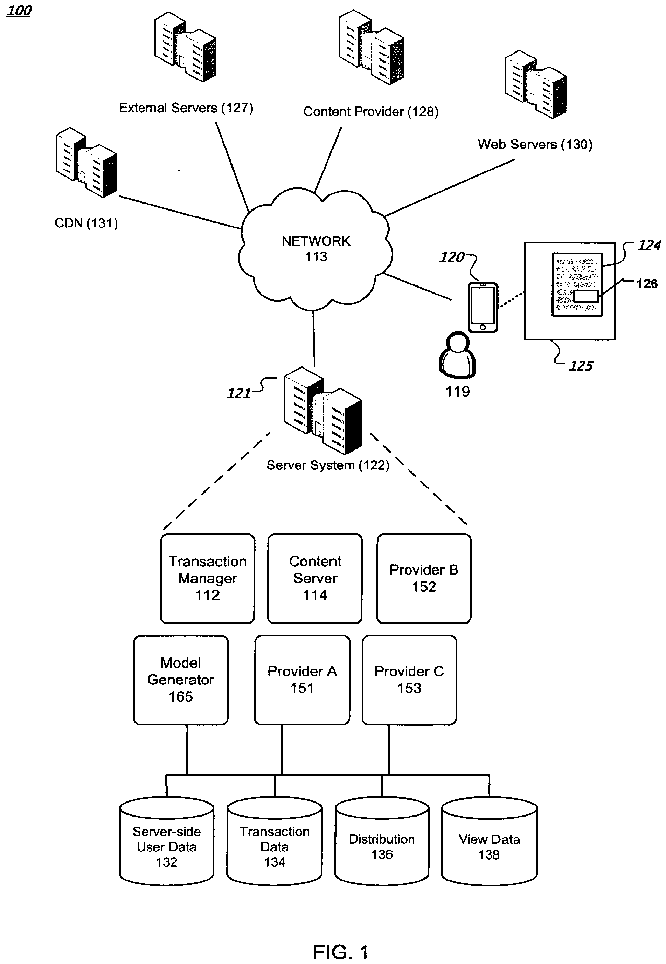

FIG. 1 illustrates an example system 100 for estimating viewability of a content element of a web page. A server system 122 provides functionality for various real-time operations. The server system 122 comprises software components and databases that can be deployed at one or more data centers 121 in one or more geographic locations, for example. The server system 122 software components comprise a transaction manager 112, a content server 114, one or more additional components (e.g., content provider A 151, content provider B 152, and content provider C 153), and model generator 165.

The server system 122 can also include one or more software components for load balancing tools and security tools. The load balancing tools manage traffic within a single data center or between multiple data centers. The security tools manage data protection and access privilege for tenants served by the data centers 121. The software components can comprise subcomponents that can execute on the same or on different individual data processing apparatus. The software components can also be combined. The server system 122 databases comprise a server-side user data database 132, transaction data database 134, distribution database 136, and view data database 138. The databases can reside in one or more physical storage systems. The software components and databases will be further described below.

The transaction manager 112 facilitates transactional aspects of using placeholder inventory. A content provider can be a client, a server or a plurality of computers. The content provider may be an advertiser. Other content providers are possible. A website may be administered by publisher (e.g., newspaper or social network), an online streaming or gaming service, or an ad network. Other administrators are possible.

The transaction manager 112 processes requests received from web browsers or other software applications displaying content from publishers, sends relevant information to content providers, conducts various operations on behalf of publishers, returns content elements to the browsers or other applications, keeps track of usage for content providers and publishers, and enforces quality standards, for example. The transaction manager 112 stores in the transaction data database 134 various transaction information for each placeholder that is transacted by the transaction manager 112 or other software components of the server system 122.

The content server 114 is a software component that serves content elements to web pages or other applications. The content server 114 can also make decisions about what content elements to serve, and track clicks or other user interactions with content elements, for example. A content element can be an image, an animation, or a video clip. Other types of content elements are also possible.

A software component (e.g., content provider A) may perform various operations. Content provider A (or another software component) may take various input to match content to a placeholder, for example. The content provider can (e.g., through an API or web pages provided by the server system 122) target a placeholder inventory for distribution of content elements and store network and connectivity information in distribution database 136. In some implementations, a content provider can be remote from the server system 122, such as external content provider 128. Here, placeholder inventory can be a collection of one or more placeholders on web pages served by a publisher's web site. A placeholder inventory can also be a collection of one or more placeholders in user interfaces presented by a software application published by a publisher. Other collections of placeholders of a placeholder inventory are possible.

The transaction manager 112 may receive a content request from a content provider for filling an available placeholder with a content element. By way of illustration, a graphical user interface 124 of a software application 125 executing on client device 120 of a user 119 can include a placeholder 126 and a corresponding identification (id) tag. The application 125 can be a web browser application, or a software application such as a game application or a maps application. For instance, a web page displayed in a browser window of a web browser (e.g., running on a personal computer) can include a placeholder and a corresponding id tag; the placeholder may be displayed on the web page. By way of illustration, the placeholder can appear at the bottom of the user interface with a corresponding id tag. Other examples of placeholders are possible. Here, the client device 120 can be a mobile phone, a smartwatch, a tablet computer, a personal computer, a game console, or an in-car media system. Other examples of a client device are possible.

In some implementations, an id tag comprises a Uniform Resource Locator (URL) from which a content element will be requested (e.g., a URL for the server system 122), Hypertext Markup Language (HTML) statements and/or JavaScript instructions for retrieving and displaying the content element (e.g., displaying the content element in a 160 × 600 iframe). The application 125 running on the client device 120 can retrieve content in the user interface 124 (e.g., a web page) through one or more data communication networks 113 such as the Internet, for example, from web servers 130 of a publisher. The id tag causes the application 125 to send (e.g., through the networks 113) a content request to the server system 122. In some implementations, the application 125 sends the content request to the server system 122 via another server system. The content request can include information about the available placeholder 126 (e.g., a size for the placeholder, an identifier for the publisher), user information (e.g., an identifier of the user 119, an Internet Protocol or IP address), and system information (e.g., types of the browser and the client device), for example. The content request can be composed in JavaScript Object Notation (JSON) or Extensible Markup Language (XML) format and transmitted to the server system 122 using Hypertext Transfer Protocol (HTTP) protocol (e.g., using an HTTP POST request method). Other content request formats and transmission methods are possible.

In response to the content request, the transaction manager 112 can access the server-side user data store database 132 based on the user's identifier (if available), and retrieve available information about the user (*e.g.,* user segment information such as age, gender, interests, or location). The transaction manager 112 generates information about the placeholder, the user, and so on, and sends the information to multiple content providers such as content provider A 151 and content provider B 152. The transaction manager 112 can also send the information through the networks 113 to servers of external content provider 128, which are external to the server system 122. The information can be composed in JSON format and sent to content providers using HTTP POST. The information can also be encoded or compressed. Other formats and transmission methods are possible.

At least one content provider may submit a response to the information from the transaction manager 112 including an identifier of a content element to be served, for example, to the transaction manager 112. The transaction manager 112 then returns the content element of the content provider to the client device 120, causing the application 125 to display the content element in the placeholder in the user interface 124. The transaction manager 112 can also return a URL for the content element to the client device 120, causing the application 125 on the client device 120 to retrieve the content element from a server (e.g., content server 114, or ad servers 127 external to the server system 122), or from servers of a content distribution network (CDN) 131. In various implementations, the transaction manager 112 can store in the transaction data database 134 transaction information such as an identifier of the content element served to the placeholder, an identifier of the content provider, an identifier of the client device 120, an identifier of the placeholder, an identifier of the content provider of the placeholder, and a time stamp. Other transaction information of a transaction is possible.

A viewport of the user interface 124 is an area of the user interface 124 within which content presented by the user interface 124 is viewable (visible) to the user 119. The viewport may be calculated by determining the resolution of the display on the client device, e.g., using the following Javascript functions:

window.screen.width * window.devicePixelRatio and
window.screen.height * window.devicePixelRatio

PixelRatio is the ratio between physical pixels and logical pixels. The pixel ratio may only needed for mobile devices (e.g., smartphones) and not desktop devices.

The placeholder 126 may not necessarily be visible in the viewport of the user interface 124. For instance, a viewport can be a display area of a web browser window displaying a scrollable web page. A placeholder at the bottom of the web page may not be in the display area, for instance, when the display area shows the top-half of the web page.

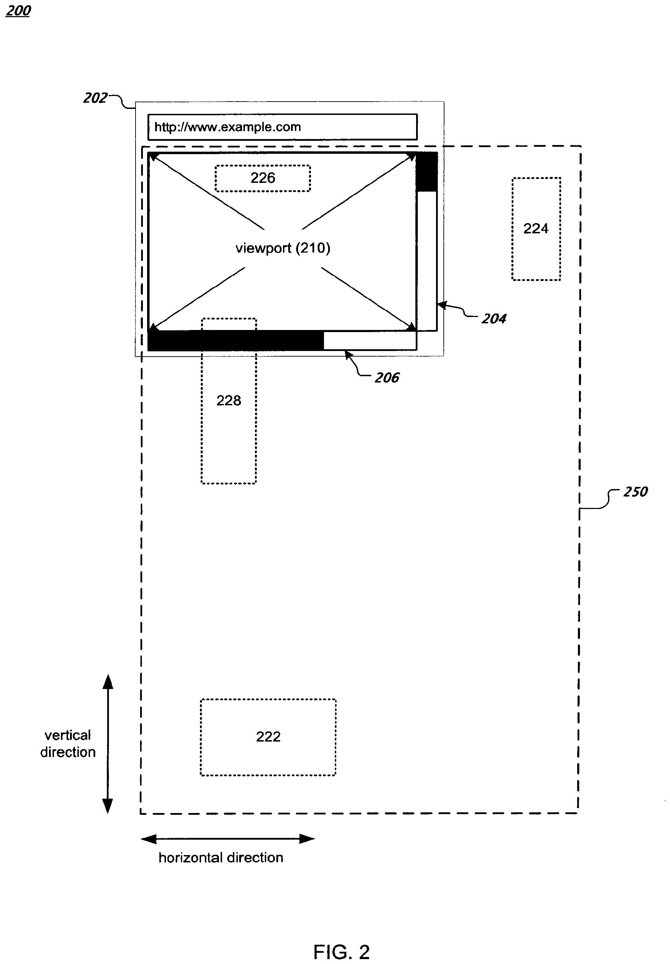

FIG. 2 is an example web browser window displaying a scrollable web page. In FIG. 2, a web browser window 202 displays a portion of a scrollable web page 250. The browser window 202 includes a vertical scroll bar 204 for scrolling the web page 250 in the vertical direction. The browser window 202 also includes a horizontal scroll bar 206 for scrolling the web page 250 in the horizontal direction. As shown in FIG. 2, only a portion of the web page 250 is viewable in the browser window's display area or viewport 210. For a placeholder (e.g., placeholder 226) that is within the viewport 210, the placeholder is viewable (in the viewport 210). For a placeholder that is beyond the viewport 210 in the vertical direction (e.g., placeholder 222) or beyond the viewport 210 in the horizontal direction (e.g., placeholder 224), the placeholder is not viewable. For a placeholder (e.g., placeholder 228) that straddles a border of the viewport 210 but is partially within the viewport 210, the placeholder is considered viewable in some implementations. In further implementations, a placeholder is considered viewable if at least 50% of the placeholder is in view for at least one second or other minimum time period. In some implementations, a placeholder can be considered as viewable only if the entire placeholder is within the viewport 210.

When a content element of a content provider is served to the user interface 124 for displaying in the placeholder 126, but the placeholder 126 is not in the viewport of the user interface 124, the content element in the placeholder is not viewable to the user 119. It may be desirable to estimate a probability of whether the content element will be viewed (i.e., viewability of the content element) for a variety of reasons. For example, the content element may include device safety information or instructions for operating a device. Accordingly, providing an estimate of viewability of the content element may give an indication of whether the device is being safely or competently used.

It is desirable for content providers to know, before submitting a content element to be served to a placeholder, how probable it is that the placeholder may be viewable to a user when the content element is served to the placeholder. Particular implementations of the subject matter described in this specification describe methods for providing a content element to a placeholder based on viewability of the placeholder. The predicted viewability of a placeholder is the probability that, when a content element is served to the placeholder, the placeholder will be viewable to a user. When a notification of an available placeholder is received by the system 122 from a client device (e.g., client device 120), the system 122 transmits instructions to the client device to determine real-time viewability data of the placeholder. The determined viewability data is then sent from the client device to the system 122. After receiving the viewability data, the system 122 calculates a predicted viewability for the placeholder using a prediction model. The prediction model can be a mathematical formula that predicts the viewability for a placeholder based on the real-time data and historical information.

Other prediction models are possible. For instance, a prediction model can be a data structure (e.g., a graph, a lookup table) that can be used to predict the viewability of a placeholder based on real-time viewability data of the placeholder. Particular implementations may involve sending a content request to at least one content provider that includes the predicted viewability of the placeholder. In this way, the content provider can submit the content element based on the predicted viewability.

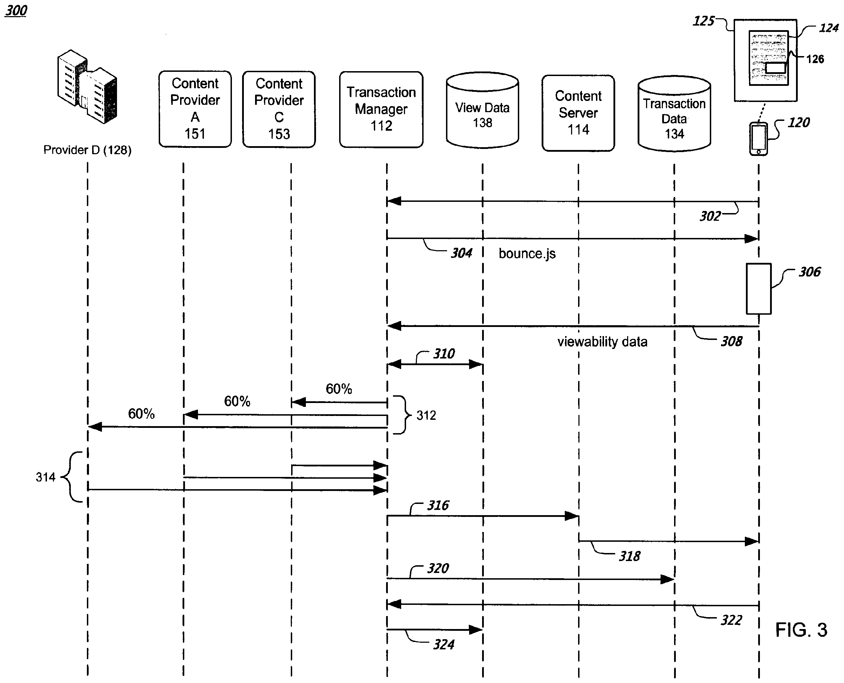

FIG. 3 is a data flow diagram of an exemplary method for serving content to an available placeholder based on viewability of the placeholder. The example method can be implemented by the transaction manager 112, for example. In FIG. 3, the transaction manager 112 receives a notification regarding the placeholder 126 that is for presentation in the user interface 124 (e.g., a web page) of the application 125 (e.g., a web browser) executing on the client device 120 (302).

Instead of sending a content request to content providers, the transaction manager 112 first sends to the client device 120 instructions "bounce.js" (304). The instructions can be JavaScript or Java programming language instructions, for example. Other types of instructions are possible. The instructions are configured to be executed by the client device 120 for determining viewability data for the placeholder 126 (306). Viewability data for the placeholder 126 can include an indication of whether the placeholder 126 is within a viewport ("in view") of the user interface 124, for example. For instance, the instructions can determine whether a Document Object Model (DOM) element corresponding to the placeholder 126 is within a bounding box corresponding to a viewport of the user interface 124. The instructions can be executed by the application 125 and determine whether placeholder 126 is within the viewport, and send back to the transaction manager 112 a message indicating whether the placeholder 126 is in view within the viewport (308). For instance, the message can include a flag with value of 1 indicating that the placeholder is in view within the viewport, or value of 0 indicating otherwise. In addition to whether the placeholder 126 is within a viewport of the user interface 124, the instructions can also determine other viewability data of the placeholder 126. For instance, the instructions can determine a position of the placeholder 126 (e.g., horizontal and vertical distances in pixels from the top left corner of the viewport), and a size (e.g., in pixels) of the viewport, and send back to the transaction manager 112 the determined position of the placeholder 126 and size of the viewport. The position of the placeholder 126 relative the size of the viewport can indicate how probable the placeholder 126 may be within the viewport at a later time, if the placeholder 126 is not already within the viewport, for example. The instructions can send back to the transaction manager 112 an error message if the instructions cannot determine viewability data of the placeholder 126 (e.g., when the user interface 124 is hidden behind another user interface).

In some implementations and by way of illustration, the instructions can comprise Javascript function:

```
getViewabilityData: function(e) {
var t, n, r, o = 0,
  i = this.isFriendlyFrame ();
 if (!i && void 0 === e.mozInnerScreenY) return {
  s: 1
 };
 if (i) {
  var c = this.injectVirtualElement ();
  t = this.getAbsolutePosition(e, c);
  for (var d, a, s = e; s != e.top;) {
   try {
a = s.frameElement
     } catch (u) {
return {
  s: 4
 }
    }
   if (null === a) return {
s: 5
    };
   s = s.parent, d =
this.getAbsolutePosition(s.parent, a), t = {
x: t.x + d.x,
y: t.y + d.y
    }
  }
  var 1 = s.innerWidth ||
s.document.documentElement.clientWidth ||
s.document.body.clientWidth,
   f = s.innerHeight ||
s.document.documentElement.clientHeight ||
s.document.body.clientHeight;
  r = {
   x: 1, y: f
  }, n = this.isInView(t, 1, f)
 } else void 0 !== e.mozInnerScreenY && (t = {
  x: e.mozInnerScreenX - e.screenX - 4,
  y: e.mozInnerScreenY - e.screenY - 40
```

```
    }, r = {
     x: screen.width - 8,
     y: screen.height - 119
    }, n = this.isInView(t, r.x, r.y));
    return (void 0 !== n && void 0 !==
    document.hidden && document.hidden || i &&
     !e.top.document.hasFocus()) && (n = !1, o = 3), {
      p: t, w: r, v: n, s: o
    }
      }
    };
    var c = function(n) {
     var r, o = "";
     try { n = e(n, 0);
    var c = e(new i(n), 1),
     d = c.getViewabilityData(window);
    void 0 !== d.v && (o += "&" + n.iv + "=" + (d.v ?
    1 : 0)), void 0 !== d.p && (o += "&" + n.pos +
     "=" + Math.round(d.p.x) + "," +
    Math.round(d.p.y)), void 0 !== d.w && (o += "&" +
    n.ws + "=" + Math.round(d.w.x) + "," +
    Math.round(d.w.y)), r = d.s, window._anxpv = d
       } catch (a) {
     "undefined" != typeof console, r = 2, t(a,
     "AnViewModule::executeViewability")
      }
     return void 0 !== r && (o += "&" + n.vs + "=" +
    r), "undefined" != typeof console, o
    };;
```

The viewability data returned by the function above comprises the viewport's width and height, the position of the top left pixel of the placeholder (x and y), and a binary flag that indicates whether the position is within the viewport or not at the time the content request is submitted to the content providers.

The position and viewport size are used to compute the relative position of the top left pixel by breaking the screen of the client device into 25 buckets: 5 buckets along the height and 5 buckets along the width and determining which bucket the x and y position falls in. Thus, the screen width may be divided by 5 and the screen height may be divided by 5. For example, a 100x50 screen would be divided into 25 separate 20x10 buckets.

Each bucket may be an array, e.g., a two dimensional array. The relative position (e.g., bucketed relative position) x and y and the binary flag are used as additional features $X$ in the prediction model described below. After receiving from the client device 120 the viewability data determined by the instructions, the transaction manager 112 calculates a predicted viewability for the placeholder 126.

The viewability is a probability that the placeholder 126 is positioned within the viewport at a time instance after the previous time instance when the instructions determined the viewability data of the placeholder 126, for example. More particularly, the viewability can be a probability that the placeholder 126 is positioned within the viewport or a part of the view port when a content element is served to the placeholder.

The transaction manager 112 can calculate a predicted viewability for the placeholder 126 using the prediction model of one or more discrete features or parameters discussed below. A feature can be a parameter describing the placeholder 126 (e.g., an id tag), a placeholder inventory the placeholder 126 belongs to (e.g., a web address for the web domain of the placeholder inventory), the application 125 (e.g., an application identifier), the client device 120 (e.g., a device identifier, or a device type identifier), or the user 119 (e.g., a user identifier). A feature can also be a combination of one or more of these features. For instance, a feature can be a combination of placeholder and placeholder inventory, a combination of placeholder and application, or a combination of placeholder inventory and application. Other combinations are possible.

By way of illustration, the prediction model can be a logistic function of one or more features with coefficients for feature values as follows:

$$p = \frac{1}{1 + e^{-(\beta_0 + X_1\beta_1 + \cdots + \beta_n X_n)}}$$

In the logistic function above, *p* is a predicted viewability. $X_1, ..., X_n$ are corresponding values for *n* features. $\beta_0, \beta_1, ..., \beta_n$ are coefficients. The transaction manager 112 can access the view data database 138 for coefficients of the logistic function (310) and the historical view rates for each of the features, and calculate a predicted viewability for the placeholder 126 using the logistic function.

The coefficients ($\beta_0, \beta_1, ..., \beta_n$) may be determined based on a maximum likelihood estimation using a logistic regression model (e.g., L1 or LASSO logistic regression). Here is an example of input features ($X_1$ (tag_id), $X_2$ (site_domain), $X_3$ (os)) and corresponding coefficients calculated by the prediction model

| tag_id view rate | site_domain view rate | os view_rate | Times served | Times viewed |
|---|---|---|---|---|
| 0.071 | 0.050 | 0.164 | 4600 | 1676 |
| 0.213 | 0.060 | 0.613 | 2550 | 909 |
| 0.177 | 0.044 | 0.079 | 450 | 18 |
| ... | ... | ... | ... | ... |

Coefficients corresponding to the table ($\beta_0, \beta_1, ..., \beta_n$) are as follows:

beta_intercept = -4.3933752014639813
beta_tag_id = 6.0147784901254715
beta_site_domain = 1.5555140132663283
beta_os = 6.6205688353232839

The view rates for each feature may be calculated from a historical platform date. For example, for a given site_domain, 'msn.com', the past 24 hours of activity may be used to calculate view_rate = *total viewable / total served.* Similarly, for an exemplary tag_id, 123456, and an exemplary operating system, 'iOS 10.0'. A given placeholder may then be defined as a combination of the three - tag id, site_domain, operating system - and a corresponding viewability estimate for the placeholder may be calculated.

A more detailed example follows. If we have a simple model with only two features:

1) tag identifier (T)
2) client device (D)

This simplified numerical example shows how to train a model (e.g., the prediction model above) on two data points or samples S1 and S2.

The first sample (S1) has a tag identifier T1 with a historical view rate of 80% and a client device D1 with a historical view rate of 90%.

On this combination, 100 content elements were served and it was observed that 82 of these content elements were viewed. Hence, an overall 82% view rate for S 1.

The second sample (S2) has a tag identifier T2 with a historical view rate of 60% and a client device D2 with a historical view rate of 80%.

On this combination, 100 content elements were served and it was observed that 66 of these content elements were viewed. Hence, an overall 66% view rate for S2.

Accordingly, exemplary training data looks as follows:

| Sample | Historical view rate on T ($X_1$) | Historical view rate on D ($X_2$) | Views | Times served | View rate (y) |
|---|---|---|---|---|---|
| S1 | 0.8 | 0.9 | 82 | 100 | 0.82 |
| S2 | 0.6 | 0.8 | 66 | 100 | 0.66 |

Applying linear regression, an attempt is made to estimate the best coefficients ($\beta_0, \beta_1, ..., \beta_n$) that fit the training data to a straight line

$$y = \beta_0 + \beta_1 * X_1 + \beta_2 * X_2 + .... \beta_n * X_n$$

where $X_1$, $X_2$, ... are the input data or independent variables (features) and y is the dependent variable, in this case, view rate.

Similarly, in logistic regression, the model tries to find the best coefficients ($\beta_0$, $\beta_1$, ..., $\beta_n$) that fit the input data points to the logistic equation noted above

$$p = \frac{1}{1 + e^{-(\beta_0 + \beta_1 X_1 + \cdots + \beta_n X_n)}}$$

where $X_1$, $X_2$, ... are the input data or features or independent variables and p is the dependent variable, in this case, view rate.

This is done using maximum likelihood estimation. Also, L1-regularization may be used, so that only the most vital features have high beta values whereas the other features get a very negligible beta value (almost zero).

Accordingly, the model is trained and the following optimal coefficients are obtained:

$\beta0$ = -1.896
$\beta1$ = 4.265
$\beta2$ = -0.00022

Now, consider test data samples S3, S4 and S5. It is desirable to estimate the viewability of these samples.

The sample S3 has a tag identifier T3 with a historical view rate of 80% and a client device D3 with a historical view rate of 90%.

The sample S4 has a tag identifier T4 with a historical view rate of 60% and a client device D4 with a historical view rate of 80%.

Whereas, the sample S5 has a tag identifier T5 with a historical view rate of 70% and a client device D5 with a historical view rate of 90%.

Then the example test data looks as follows:

| Sample | Historical view rate on T | Historical view rate on D |
| --- | --- | --- |
| S3 | 0.8 | 0.9 |
| S4 | 0.6 | 0.8 |
| S5 | 0.7 | 0.9 |

And using the prediction model above, probability may be calculated as:

| Sample | Historical view rate on T | Historical view rate on D | Probability of view |
| --- | --- | --- | --- |
| S3 | 0.8 | 0.9 | 0.81999915 |
| S4 | 0.6 | 0.8 | 0.66000106 |
| S5 | 0.7 | 0.9 | 0.74834769 |

Samples S3 and S4 have similar historical view rates to input samples S1 and S2 and hence their predicted probability of viewability is also very similar to the view rate observed for the input samples.

Accordingly, logistic regression may be used to train the prediction model on training samples and then the optimal beta coefficients are used to calculate the output probability on previously unseen test samples.

After calculating a predicted viewability of the placeholder 126, the transaction manager 112 sends a content request for the placeholder 126 to multiple content providers, for example, content provider C 153, content provider A 151, and external content provider 128 (312). In addition to placeholder and user information, the content request includes the predicted viewability (e.g., 60%) calculated with the prediction model. In this way, a content provider can determine whether it makes sense to submit content for the placeholder 126 based on the predicted viewability.

In some implementations, the content provers may be bidders, the placeholder may be an ad space, the content request may be a bid (or ad) request, and the content element may be an ad (also referred to as a creative). The act of serving the ad on a web page may be referred to as an impression. Publishers can sell their ad space inventories to advertisers. Multiple publishers and multiple advertisers can participate in auctions in which selling and buying of ad space inventories take place. Auctions can be conducted by an ad network or ad exchange that brokers between a group of publishers and a group of advertisers. Accordingly, the transaction manager 112 may conduct an auction on the ad space by sending bid requests for the placeholder 126 to multiple bidders.

Further, selling and buying ad spaces can be based on pricing or payment models such as cost per thousand impressions (CPM), cost per click (CPC), and cost per action or acquisition (CPA). In the CPM model, advertisers typically pay for every impression of their advertisement; the price paid for each impression is measured in price per 1000 ("mille") impressions. In the CPC model, advertisers typically pay each time a viewer clicks on their advertisement. In the CPA model, advertisers pay for every action, such as a sale or registration, completed as a result of a viewer clicking on their advertisement. Accordingly, each bidder can submit a CPM or CPC bid at a price deemed appropriate based on the predicted viewability, or the bidder can submit a cost-per-view (CPV) bid. In a CPV model, advertisers typically pay each time their advertisement is viewed by a user. The transaction manager will calculate a corresponding estimated CPM (eCPM) bid for use in the auction bid ranking. An estimated CPM (eCPM) bid is a CPV bid multiplied by the predicted viewability. For instance, the content provider A may determine a CPV bid price of $0.10 for an ad space of the ad space inventory including the placeholder 126. Based on the predicted viewability of 60% in that the placeholder 126 may be viewed by a user (the user 119), the transaction manager will discount the bid price for the placeholder 126 to $0.06. In some implementations, a seller is able to set an eCPM floor price for their inventory which serves as a minimum bid for eCPM bids. In a second-price auction, the eCPM bid can act as the second price in the auction should a non-eCPM bid win. Other methods for bidding for an ad space by a bidder based on a predicted viewability of the ad space are possible. For instance, a bidder may forgo submitting a bid on the auction if the bidder determines that the predicted viewability is less than a specific threshold (e.g., less than 35%).

If a eCPM bid wins an auction, the transaction manager 112 will log the transaction except that the transaction will have no cost to the buyer or revenue to the seller.

An encoded data structure, which includes the transaction ID, is then served with the content element. In addition, a viewability measurement script (described below) may be served as part of the encoded data structure. The measurement script executes in the client devices, determines whether the content element associated with the transaction ID was viewable, and sends the measurement results back to the transaction manager 112 including the encoded data structure. If the measurement results indicate that the content element is viewable, the transaction manager 112 will log information for the transaction and send notification to the content provider that the content element was viewed.

As an alternative to using the viewability measurement script, historical viewability data may be used to estimate viewability of the content element. The estimated viewability information may then be sent to the content provider by the transaction manager, as an alternative to the result of the measurement script.

Content providers can send their respective content elements for the placeholder 126 to the transaction manager 112 (314). In FIG. 3, the transaction manager 112 may select the content element from the external content provider (e.g., based upon a predetermined evaluation approach), and notifies the content server 114 (316). The content server 114 then in turns sends a content element for the external content provider to the client device 120 to be served to the placeholder 126 318). In addition, the transaction manager 112 records transaction information (e.g., content provider, the placeholder 126, timestamp, and so on) in the transaction data database 134 (320).

In some implementations, after the content element for the external content provider is served to the placeholder 126, instructions (e.g., JavaScript) can determine whether the placeholder 126 is in view of the user interface 124, and send back to the transaction manager 112 a message indicating whether the placeholder (containing the content element for the external content provider) is in view in the user interface 124 (322). The instructions check that an content element is present (verses just a container for the content element). They also measure according to one or more definitions of a "viewable" content element, which generally is a function of how much of the placeholder is in-view and a for how long. The measurement data determined by the instructions is a 'result' with three options - 1) unable to measure, 2) measured not viewable, 3) measured viewable. The measurement data will also include the definition id that the result is for.

The transaction manager 112 can store the in-view data in the view data database 138 in reference to the placeholder 126 (324). Other methods for determining whether the placeholder 126 and the content element for the external content provider are in view in the user interface 124 are possible. For instance, the content element may cause the software application 125 to send the transaction manager 112 a notification of a click event when the content element is selected by the user 119. In further implementations, the mobile application executing on a client device 120 can use a software development kit (SDK) for determining viewability of placeholders in the mobile application's user interface. The SDK will including functionality for sending viewability data to the transaction manager 112.

The model generator 165 or another software component in the server system 122 can use the in-view data to update the prediction model described earlier, for example. In some implementations, the historical viewability data for each feature is updated hourly, with a 24-hour lookback window. In some implementations, the features can include:

1) tag_id
2) site_domain

3) operating_system
4) interactions of all these features with each other
5) bucketed relative position x
6) bucketed relative position y
7) binary prebid_in_view_type flag

Interactions of features (feature 4 above) may be the multiplied historical view rates of two other features. For example, if a placeholder is for tag_id 123456, which has a historical view rate of 0.5 , and site_domain, 'msn.com', which has historical view-rate of .75, the tag-id-site_domain interaction feature value would be .5*.75 = .375. Each other possible pair of features may also be multiplied. Thus, feature 4) may involve multiplying pairs of features 1 to 3 with the other (e.g., *tag_id* x *site_domain, tag_id* x *operating_system, site_domain* x *operating_system*). L1 logistic regression may be applied (similarly to the way the regression is applied for the features themselves) to determine which interactions are useful in estimating viewability.

The features may be isolated from variables typically collected by a web server. The variables may come from HTTP traffic (for example, the referrer or domain of the requesting web page), associated pre-configured objects on the server (for example, a publisher id for the request), or data generated during the transaction with content providers (e.g., a winning bid price in the context of an auction). In some cases, the features may be a subset of variables collected in Apache Hadoop log files. Using the L1 logistic regression discussed above, lambda regularization may be used to determine which variables in the log files are most predictive of viewability. In particular, lambda may be decreased from a large number to a small number until all coefficients (beta values) can be determined.

The following lambda values may be determined for various variables:

0.211433203337 : tag_id
0.116037002248 : site_domain
0.0333732699603 : browser_6
0.0183156388887 : browser_2
0.00916551055405 : browser_17
0.00835733749045 : geo_DE
0.00727670649933 : os_90

Accordingly, a subset of the variables above may be identified as features, ranked in order of predictive power. In particular, tag_id and site_domain are the two features most predictive of whether a content element will be viewed. Following them, browsers 6, 2 and 17, which are Firefox 3, iPhone and Internet Explorer 10 respectively, are the most predictive. Tag_id and site_domain are the most granular features and because their historical view rate is used in training the model, it makes sense that they are the most predictive. Browser types as the next most predictive features and this also makes sense because the in-browser viewability script relies on Flash and other browser applications to load and run, then send a response whether a content element is in view. Because some browsers better support viewability determinations than others, browser type provides a signal about viewability.

In some cases, viewability rates are only stored for a specified number (e.g., three) of the most predictive features, e.g., tag_id, site_domain and browser. The specified number may be determined so as to limit the amount of data stored and provide a sufficiently reliable estimate of viewability.

Similarly, using a relative position (i.e., a bucketed relative position) for the placeholder may have the benefit of limiting the calculations to be performed to estimate viewability. If the relative position were not used (i.e., the display is not divided into arrays), then a 1920x1200 screen would require dealing with 23 million possible positions.

The binary prebid_in_view_type flag may be returned by the 'bounce.js' script, discussed above. The binary prebid_in_view_type flag may indicate whether the placeholder is currently (i.e., when the script is run) in the viewable area of the screen.

The model generator 165 uses the historical viewability rates of the features to build a logistic regression model that assigns different weights or model coefficients to each of the features. A new model can be computed every day using the previous day's viewability rates and the model coefficients are updated. These model coefficients are then used along with the historical viewability data to compute the predicted viewability of all placeholders for that day. We monitor performance metrics including model prediction accuracy (e.g., predicted vs. actual view-rates), overall model prediction bias (e.g., total predicted vs. total actual views), etc. and may choose to revert to a previous model if performance seems to have deteriorated considerably. If the newly computed model coefficients are drastically different from the most recent model, they are not updated.

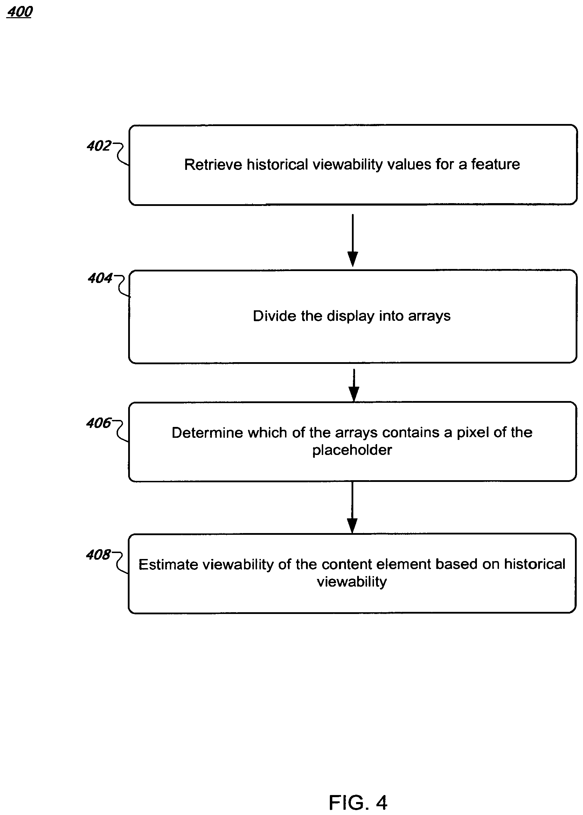

FIG. 4 is a flowchart of another example method for estimating viewability of a content element of a web page based on a predicted viewability of a placeholder for the content element. The method can be implemented using software components executing on one or more data processing apparatus that are part of the data center 121 described earlier, for example. For instance, the method can be implemented using the transaction manager 112. The method may begin by receiving a notification of a placeholder, the placeholder being part of a placeholder inventory of a seller, the placeholder being for presentation in a user interface of an application executing on a client device of a user.

Further, the method includes retrieving historical viewability values for at least one feature, wherein the at least one feature includes a position of the placeholder on the display (402). The feature includes a relative position of the placeholder on the display (404). The method may send, to the client device, instructions configured to be executed by the client device for determining viewability data of the placeholder, the viewability data comprising whether the placeholder is within a viewport of the user interface.

The relative position of the placeholder may be calculated by dividing the display of the client computer into a specified number of arrays (404), and determining which of the arrays a specified pixel of the placeholder is in (406). The method may receive, from the client device, the viewability data as determined by the instructions at a first time instance. The method further comprises estimating viewability of the content element based on the historical viewability values for the at least one feature (408). The method may calculate a predicted viewability in that the placeholder is positioned within the viewport at a second time instance after the first time instance, wherein calculating the predicted viewability uses a prediction model comprising one or more features. The method may send, to one or more content providers, a content request for the placeholder, the content request comprising the predicted viewability.

According to an exemplary aspect, a computer-implemented method is provided. The method may comprise performing by one or more server computers receiving a notification of an ad space, the ad space being part of an ad space inventory of a seller, the ad space being for presentation in a user interface of an application executing on a client device of a user. The method may further comprise performing by one or more server computers sending, to the client device, instructions configured to be executed by the client device for determining viewability data of the ad space, the viewability data comprising whether the ad space is within a viewport of the user interface. The method may comprise performing by one or more server computers receiving, from the client device, the viewability data as determined by the instructions at a first time instance. The method may comprise performing by one or more server computers calculating a predicted viewability that the ad space is positioned within the viewport at a second time instance after the first time instance, wherein calculating the predicted viewability uses a prediction model comprising one or more features. The method may comprise performing by one or more server computers sending, to a plurality of bidders, a bid request for bidding on an auction of the ad space, the bid request comprising the predicted viewability.

In some cases, the method further comprises receiving, from one or more of the bidders, bids in response to the bid request, each bid comprising a respective bid price as determined by a respective bidder according to the predicted viewability. The method may further comprise selecting one of the bids as a winning bid. The method may further comprise determining whether a creative associated with the winning bid was viewed, and optionally charging an account associated with the winning bid.

In some cases, the viewability data as determined by the instructions at the first time instance further comprises a position of the ad space relative to the viewport or a size of the viewport.

In some cases, a particular feature describes the ad space, the ad space inventory, the application, the client device, or the user.

A particular feature may comprise one or more of an identifier of the ad space, web domain for the ad space, and identifier of the application.

The prediction model may be a logistic function of the features; the logistic function may comprise respective coefficients for the features.

According to another exemplary aspect, a system is provided. The system may comprise one or more computers programmed to perform operations. The operations may comprise receiving a notification of an ad space, the ad space being part of an ad space inventory of a seller, the ad space being for presentation in a user interface of an application executing on a client device of a user. The operations may further comprise sending, to the client device, instructions configured to be executed by the client device for determining viewability data of the ad space, the viewability data comprising whether the ad space is within a viewport of the user interface. The operations may further comprise receiving, from the client device, the viewability data as determined by the instructions at a first time instance. The operations may further comprise calculating a predicted viewability that the ad space is positioned within the viewport at a second time instance after the first time instance. Calculating the predicted viewability may use a prediction model comprising one or more features. The operations may further comprise sending, to a plurality of bidders, a bid request for bidding on an auction of the ad space, the bid request comprising the predicted viewability.

In some cases, he operations further comprise receiving, from one or more of the bidders, bids in response to the bid request, each bid comprising a respective bid price as determined by a respective bidder according to the predicted viewability. The operations may further comprise selecting one of the bids as a winning bid.

In some cases, the operations further comprise determining whether a creative associated with the winning bid was viewed. The operations may further comprise charging an account associated with the winning bid.

In some cases, the viewability data as determined by the instructions at the first time instance further comprises a position of the ad space relative to the viewport or a size of the viewport.

In some cases, a particular feature describes the ad space, the ad space inventory, the application, the client device, or the user.

A particular feature may comprise one or more of an identifier of the ad space, web domain for the ad space, and identifier of the application.

The prediction model may be a logistic function of the features. The logistic function may comprise respective coefficients for the features.

According to yet another exemplary aspect, an article of manufacture (e.g., a computer program product) is provided. The article of manufacture may comprise a non-transitory computer-readable medium having instructions stored thereon that, when executed by one or more computers, cause the computers to perform operations comprising receiving a notification of an ad space, the ad space being part of an ad space inventory of a seller, the ad space being for presentation in a user interface of an application executing on a client device of a user. The operations may further comprise sending, to the client device, instructions configured to be executed by the client device for determining viewability data of the ad space, the viewability data comprising whether the ad space is within a viewport of the user interface. The operations may further comprise receiving, from the client device, the viewability data as determined by the instructions at a first time instance. The operations may further comprise calculating a predicted viewability that the ad space is positioned within the viewport at a second time instance after the first time instance. Calculating the predicted viewability may involve using a prediction model comprising one or more features. The operations may further comprise sending, to a plurality of bidders, a bid request for bidding on an auction of the ad space, the bid request comprising the predicted viewability.

The operations may further comprise receiving, from one or more of the bidders, bids in response to the bid request, each bid comprising a respective bid price as determined by a respective bidder according to the predicted viewability. The operations may further comprise selecting one of the bids as a winning bid.

The operations may further comprise determining whether a creative associated with the winning bid was viewed. The operations may further comprise charging an account associated with the winning bid.

In some cases, the viewability data as determined by the instructions at the first time instance further comprises a position of the ad space relative to the viewport or a size of the viewport.

In some cases, a particular feature describes the ad space, the ad space inventory, the application, the client device, or the user.

The particular feature may comprise one or more of an identifier of the ad space, web domain for the ad space, and identifier of the application.

The prediction model may be a logistic function of the features, the logistic function comprising respective coefficients for the features.

Implementations of the subject matter and the operations described in this specification can be implemented in digital electronic circuitry, or in computer software, firmware, or hardware, including the structures disclosed in this specification and their structural equivalents, or in combinations of one or more of them. Implementations of the subject matter described in this specification can be implemented as one or more 202 computer programs, i.e., one or more modules of computer program instructions, encoded on computer storage medium for execution by, or to control the operation of, data processing apparatus. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described in this specification can be implemented as operations performed by a data processing apparatus on data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language resource), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a smart phone, a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, implementations of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending resources to and receiving resources from a device that is used by the user; for example, by sending web pages to a web browser on a user's client device in response to requests received from the web browser.

Implementations of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some implementations, a server transmits data (e.g., an HTML page) to a client device (e.g., for purposes of displaying data to and receiving user input from a user interacting with the client device). Data generated at the client device (e.g., a result of the user interaction) can be received from the client device at the server.

A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions.

While this specification contains many specific implementation details, these should not be construed as limitations on the scope of any inventions or of what may be claimed, but rather as descriptions of features specific to particular implementations of particular inventions. Certain features that are described in this specification in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems can generally be integrated together in a single software product or packaged into multiple software products.

Thus, particular implementations of the subject matter have been described. Other implementations are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

**Claims**

1. A computer-implemented method for estimating viewability of a content element of a web page,
   wherein viewability is a probability that the content element is positioned within a viewport;
   wherein the viewport is a visible area of the web page on a display of a client computer;
   wherein the web page comprises at least one placeholder;
   wherein the placeholder is a region of the web page in which the content element can be placed, the method comprising:

   retrieving (402) historical viewability values for at least one feature, wherein the at least one feature includes a position of the placeholder on the display,
   wherein the position of the placeholder is a relative position, wherein the relative position is calculated by:

   dividing (404) the display of the client computer into a specified number of arrays; and
   determining (406) which of the arrays a specified pixel of the placeholder is in; and

   estimating (408) viewability of the content element based on the historical viewability values for the at least one feature.

2. The method of claim 1, wherein, for each feature, a historical viewability value for the feature is calculated according to the following operation:

$$\frac{total\ viewable}{total\ served}$$

   wherein the total viewable is a total number of times one or more content elements described by the feature were served on the web page and displayed within the viewport during a specified period,
   wherein the total served is a total number of times the one or more content elements described by the feature were served on the web page during the specified period, and
   wherein *total viewable <= total served.*

3. The method of claim 1 or 2, wherein each of the arrays contains a quantity of pixels of the display, wherein each of the arrays may be a multidimensional array.

4. The method of any one of the preceding claims, wherein each of the arrays is the same size and the quantity of pixels is the same for each of the arrays.

5. The method of any one of the preceding claims, wherein the specified pixel of the placeholder is a corner of the placeholder, wherein the specified pixel of the placeholder may be the top left corner of the placeholder.

6. The method of any one of claims 1 to 4, wherein a location of the specified pixel of the placeholder depends on a type of the content element.

7. The method of claim any one of the preceding claims, wherein the at least one feature is a plurality of features, wherein the at least one feature further includes one or more of the following:

an identifier of the content element, a domain of the web page, an identifier of a browser of the client computer, an identifier of an operating system of the client computer, a geographic location of the client computer, a characteristic of the display;
wherein the historical viewability values are retrieved for each of the features.

8. The method of claim 7, further comprising combining a plurality of the features into a combined feature;
wherein the estimating of the viewability of the content element is based on each of the features and the combined feature.

9. The method of claim 6 or 7, wherein the estimating of the viewability of the content element is carried out according to the following function:

$$p = \frac{1}{1 + e^{-(\beta_0 + X_1\beta_1 + \cdots + \beta_n X_n)}}$$

wherein $X_1 \ldots X_n$ are each historical viewability values for corresponding features or the combined feature, wherein $\beta_0 \ldots \beta_n$ are coefficients.

10. The method of any one of the preceding claims, wherein dividing the display of the client computer into a specified number of arrays comprises dividing the entire display of the client computer into the specified number of arrays, such that each pixel of the display is contained in one of the arrays, wherein each pixel of the display may be contained in only one of the arrays.

11. The method of any one of the preceding claims, wherein the web page is horizontally and/or vertically scrollable, wherein the web page includes at least one non-visible area outside the viewport that is not visible on the display of the client computer.

12. The method of any one of the preceding claims, wherein the historical viewability values are based on at least one of the following:

a viewport size in pixels;
determining whether a DOM element corresponding to the placeholder is within a bounding box corresponding to the viewport;
whether a content element is in the placeholder;
a percentage of the placeholder that is in the viewport;
a duration that the placeholder is in the viewport.

13. The method of any one of the preceding claims, wherein the historical viewability values are determined for multiple content elements, multiple placeholders, and/or multiple viewports.

14. A computer program product comprising computer-readable instructions, which, when loaded and executed on a computer system, cause the computer system to perform operations according to the method of any one of the preceding claims.

15. A computer system (122) for estimating viewability of a content element of a web page,

wherein viewability is a probability that the content element is positioned within a viewport;
wherein the viewport is a visible area of the web page on a display of a client computer;
wherein the web page comprises at least one placeholder;

wherein the placeholder is a region of the web page in which the content element can be placed, the method comprising:

at least one processor configured to:

retrieve historical viewability values for at least one feature, wherein the at least one feature includes a position of the placeholder on the display,
wherein the position of the placeholder is a relative position, wherein the processor is configured to calculate the relative position by:

dividing the display of the client computer into a specified number of arrays; and
determining which of the arrays a specified pixel of the placeholder is in; and

estimate viewability of the content element based on the historical viewability values for the at least one feature.

_100_

External Servers (127)

Content Provider (128)

Web Servers (130)

CDN (131)

NETWORK
113

_120_

_124_

_126_

119

_125_

_121_

Server System (122)

| Transaction Manager 112 | Content Server 114 | Provider B 152 |
|---|---|---|

| Model Generator 165 | Provider A 151 | Provider C 153 |
|---|---|---|

| Server-side User Data 132 | Transaction Data 134 | Distribution 136 | View Data 138 |
|---|---|---|---|

FIG. 1

200

http://www.example.com

226

viewport (210)

204

206

224

228

250

222

vertical
direction

horizontal direction

FIG. 2

FIG. 3

EP 3 499 385 A1

<u>*400*</u>

402 — Retrieve historical viewability values for a feature

404 — Divide the display into arrays

406 — Determine which of the arrays contains a pixel of the placeholder

408 — Estimate viewability of the content element based on historical viewability

FIG. 4

21

Europäisches
Patentamt

European
Patent Office

Office européen
des brevets

## EUROPEAN SEARCH REPORT

Application Number

EP 17 00 2020

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/055023 A1 (MCNEELEY MICHAEL [US] ET AL) 3 March 2011 (2011-03-03)<br>* figures 5-7 *<br>* paragraph [0006] *<br>* paragraphs [0019] - [0024] *<br>* paragraphs [0039] - [0042] *<br>----- | 1-15 | INV.<br>G06F17/30<br>G06Q30/02 |

TECHNICAL FIELDS
SEARCHED (IPC)

G06F
G06Q

The present search report has been drawn up for all claims

| Place of search | Date of completion of the search | Examiner |
|---|---|---|
| Munich | 25 April 2018 | Michalski, Stéphane |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 00 2020

This annex lists the patent family members relating to the patent documents cited in the above-mentioned European search report.
The members are as contained in the European Patent Office EDP file on
The European Patent Office is in no way liable for these particulars which are merely given for the purpose of information.

25-04-2018

| Patent document cited in search report | Publication date | Patent family member(s) | Publication date |
|---|---|---|---|
| US 2011055023 A1 | 03-03-2011 | NONE | |

EPO FORM P0459

For more details about this annex : see Official Journal of the European Patent Office, No. 12/82